# EUROPÄISCHE PATENTANMELDUNG

(11) **EP 3 896 322 A1**
(43) Veröffentlichungstag der Anmeldung: **20.10.2021**
(21) Anmeldenummer: 20169536.8
(22) Anmeldetag: 15.04.2020
(51) Int. Cl.: F16L 19/12, F16L 19/08

(54) **VERSCHRAUBUNG FÜR ROHR- ODER SCHLAUCHLEITUNGEN**

(71) Anmelder: Parker Hannifin EMEA S.à.r.l., 1163 Etoy (CH)
(72) Erfinder: Ehrke, Dieter, 33659 Bielefeld (DE); Schippers, Carsten, 33739 Bielefeld (DE)
(74) Vertreter: Feucker, Max Martin

(57) **Zusammenfassung**

Die vorliegende Erfindung betrifft eine Verschraubung, mit einer Dichtungsträgeranordnung (1), wobei die Dichtungsträgeranordnung (1) einen Dichtungsträgerring (2) und ein Dichtelement (3) aufweist, wobei der Dichtungsträgerring (2) einen vorderen Außenkonus (7) und einen sich an den vorderen Außenkonus (7) anschließenden Außenabschnitt (9) ausbildet, wobei eine Rohr- oder Schlauchleitung (6) durch die Dichtungsträgeranodnung in Richtung des Verschraubungskörpers (5) steckbar ist und die Überwurfmutter (4) aus einer Ausgangsstellung in eine Montagestellung anziehbar ist, dadurch gekennzeichnet, dass das Dichtelement (3)
• einen am vorderen Außenkonus (7) angeordneten Dichtungsansatz (10) und
• einen sich von dem Dichtungsansatz (10) in Richtung des Außenabschnitts (9) erstreckenden Halteabschnitt (11) aufweist,
wobei das Dichtelement (3) so ausgebildet ist, dass der Halteabschnitt (11) des Dichtelements (3) beim Anziehen der Überwurfmutter (4) von dem Dichtungsansatz (10) des Dichtelements (3) getrennt wird.

## Beschreibung

Die vorliegende Erfindung betrifft eine Verschraubung mit einem Verschraubungskörper, wobei der Verschraubungskörper eine Bohrung zur Durchleitung eines Mediums und ein Außengewinde aufweist, mit einer Überwurfmutter, wobei die Überwurfmutter ein Innengewinde zum Aufschrauben auf das Außengewinde des Verschraubungskörpers aufweist, und mit einer Dichtungsträgeranordnung, wobei die Dichtungsträgeranordnung einen Dichtungsträgerring und ein Dichtelement umfasst, wobei der Dichtungsträgerring einen vorderen Außenkonus und einen sich an den vorderen Außenkonus anschließende Außenabschnitt aufweist, wobei eine Rohr- oder Schlauchleitung durch die Dichtungsträgeranordnung in Richtung des Verschraubungskörpers steckbar ist und die Überwurfmutter aus einer Ausgangsstellung in eine Montagestellung anziehbar ist.

Der Dichtungsträgerring der Dichtungsträgeranordnung kann als Schneidring ausgebildet sein, wozu an seinem vorderen Ende mindestens eine Schneidkante ausgebildet ist, die beim Anziehen der Überwurfmutter in die Montagestellung unter Kerbwirkung in die Rohrleitung einschneidet. Alternativ kann der Dichtungsträgerring als Kompressionshülse ausgebildet sein, die in ihrem hinteren Bereich einen Innenkonus aufweist, wobei eine dann an der Rohrleitung vorgesehene Wulst beim Anziehen der Überwurfmutter in den hinteren Innenkonus der Kompressionshülse gedrückt wird.

Eine solche Verschraubung ist beispielsweise aus EP 3 364 086 A1 bekannt. Die Anordnung des Dichtelements am vorderen Außenkonus des Dichtungsträgerrings ist insoweit vorteilhaft, als dass sehr gute Dichtungseigenschaften zwischen dem vorderen Außenkonus des Dichtungsträgerrings und dem Verschraubungskörper erzielt werden können. Da bei der Herstellung der Dichtungsträgeranordnung der filigrane Dichtungsring manuell in einer in dem Außenkonus ausgebildeten Aufnahmenut angeordnet werden muss, ist der Aufwand für die (Vor-)Montage der Dichtungsträgeranordnung vergleichsweise hoch.

Aufgabe der vorliegenden Erfindung ist es daher, die mit Bezug zum Stand der Technik geschilderten Nachteile zu beseitigen und insbesondere eine Verschraubung anzugeben, die mit geringerem Aufwand herstellbar ist.

Gelöst wird die Aufgabe durch eine (Rohrleitungs- oder Schlauchleitungs-)Verschraubung mit den Merkmalen des unabhängigen Anspruchs. Vorteilhafte Weiterbildungen der Verschraubung sind in den abhängigen Ansprüchen und der Beschreibung angegeben, wobei einzelne Merkmale der vorteilhaften Weiterbildungen in technisch sinnvoller Weise beliebig miteinander kombinierbar sind.

Gelöst wird die Aufgabe insbesondere dadurch, dass das zunächst einteilige Dichtelement einen am vorderen Außenkonus angeordneten Dichtungsansatz und einen sich von dem Dichtungsansatz in Richtung des Außenabschnitts erstreckenden Halteabschnitt aufweist, wobei das Dichtelement so ausgebildet ist, dass der Halteabschnitt des Dichtelements beim Anziehen der Überwurfmutter von dem Dichtungsansatz des Dichtelements getrennt wird. Somit verbleibt der Halteabschnitt als Dichtungsring in einer Aufnahmenut des Dichtungsträgerrings oder an einer vorderen Stirnfläche des Dichtungsträgerrings, während der Halteabschnitt beim Anziehen relativ zu dem Dichtungsträgerring versetzt wird.

Die Erfindung sieht in ihrem Grundgedanken also vor, dass das einteilige Dichtelement neben dem den späteren Dichtungsring ausbildenden schnurartigen Dichtungsansatz einen Halteabschnitt aufweist, der sich von dem Dichtungsansatz nach hinten erstreckt und mit dem das Dichtelement einfach auf dem Dichtungsträgerring montierbar ist. Eine solche Ausbildung des Dichtelements ermöglicht auch die maschinelle Anordnung des Dichtelements auf dem Dichtungsträgerring, sodass die Herstellung der Dichtungsträgeranordnung deutlich vereinfacht ist. Zudem kann der Monteur der Verschraubung nach einer Erstmontage und anschließendem Lösen der Überwurfmutter den Erfolg der Erstmontage einfach erkennen. So zeigt die Abtrennung des Halteabschnitts von dem Dichtungsansatz schon einen unbedingt notwendiges Anziehfortschritt während der Erstmontage an, während der Abstand des abgetrennten Halteabschnitts zu dem Dichtungsansatz einen Grad des zum Erreichen einer Endmontagestellung erforderlichen Anziehfortschritts anzeigt.

Der Dichtungsansatz wird insbesondere durch einen ringförmigen (schnurartigen) Fortsatz gebildet, der relativ zu dem Halteabschnitt radial nach innen vorsteht. Der Dichtungsansatz weist dabei eine Dicke in radialer Richtung und Länge in radialer Richtung im Bereich von 0,2 bis 2,5 mm auf. Die Dicke des Dichtungsansatzes hängt im Wesentlichen von der Größe der Verschraubung ab.

Der Halteabschnitt ist hingegen insbesondere auf seiner Innenseite bevorzugt ringförmig ausgebildet und zwar entweder konisch in Richtung des Dichtungsansatzes zusammenlaufend oder kreiszylinderförmig (also mit einem konstanten Innendurchmesser). Der Dichtungsansatz und der Halteabschnitt bilden auf der Innenseite eine Art Stufe aus, an der der Halteabschnitt beim Anziehen der Überwurfmutter von dem Dichtungsansatz abgetrennt wird.

Der Verschraubungskörper weist insbesondere eine Aufnahme auf, in die das Ende der Rohr- oder Schlauchleitung eingesteckt wird, wobei eine Stirnfläche der Rohr- oder Schlauchleitung in der Montagestellung in Anlage mit einem Boden der Aufnahme kommt. Die Aufnahme weist zudem einen Innenkonus auf, in den der vordere Außenkonus des Dichtungsträgerrings zumindest während des Anziehens der Überwurfmutter eingeführt wird. Die Dichtungsträgeranordnung und insbesondere auch der Verschraubungskörper sind dabei bevorzugt so dimensioniert, dass eine Stirnfläche des Verschraubungskörpers beim Anziehen der Überwurfmutter in Anlage mit dem Halteabschnitt des Dichtelements gelangt, wobei beim weiteren Anziehen der insbesondere in einer Aufnahmenut im vorderen Außenkonus oder vor einer vorderen Stirnfläche des Dichtungsträgerrings angeordnete Dichtungsansatz mit dem Dichtungsträgerring relativ zu dem Verschraubungskörper (und insbesondere relativ zu dem Innenkonus des Verschraubungskörpers) bewegt wird, während der Halteabschnitt durch den Verschraubungskörper an einer solchen Relativbewegung gehindert wird und somit von dem Verschraubungskörper fixiert wird, sodass der Dichtungsträgerring eine Relativbewegung während des weiteren Anziehens zu dem Halteabschnitt ausführt, wodurch der Halteabschnitt von dem Dichtungsansatz abgeschert wird.

Der vordere Außenkonus des Dichtungsträgerrings ist also insbesondere jener vordere (in Einsteckrichtung der Rohr- bzw. Schlauchleitung gesehene) Abschnitt, der in der Montagestellung in dem Innenkonus des Rohrverschraubungskörpers angeordnet ist und zumindest in der Montagestellung eine konische Gestalt aufweist.

Der sich an den Außenkonus anschließende Außenabschnitt kann prinzipiell ebenfalls konusförmig ausgebildet sein, ist aber bevorzugt kreiszylinderförmig (also ohne Durchmesseränderung) ausgebildet. Der Außenabschnitt ist also insbesondere jener Außenumfangsbereich des Dichtungsträgerrings, auf den der Halteabschnitt in der Ausgangsstellung der Verschraubung zumindest teilweise aufgesteckt ist und entlang dem der Halteabschnitt während des Anziehens der Überwurfmutter bewegt wird.

Für einen definierten Abtrennvorgang während des Anziehens der Überwurfmutter und zur Vorgabe einer definierten Montageendstellung ist zwischen dem Außenkonus und dem insbesondere kreiszylinderförmigen Außenabschnitt eine (gegebenenfalls eine Abrundung/Radius aufweisende) Stufe ausgebildet. Die Stufe kommt in der Montageendstellung mit der Stirnfläche des Verschraubungskörpers in Anlage, sodass sich das Drehmoment zum weiteren Anziehen der Überwurfmutter stark erhöht und der Monteur somit ein haptisches Signal erhält, dass die Montage beendet ist.

Um das Erreichen der Montageendstellung für den Monteur optisch erkennbar zu machen, ist der Außenabschnitt auf der dem Außenkonus abgewandten Seite durch einen schulterförmigen Absatz begrenzt. Die Länge des Außenabschnitts in axialer Richtung ist also so dimensioniert, dass ein dem Dichtungsansatz abgewandtes Ende des Halteabschnitts in der vorgeschriebenen Montageendstellung an dem schulterförmigen Absatz in Anlage ist. Wenn nach einer Erstmontage die Überwurfmutter gelöst wird, kann einfach erkannt werden, ob die vorgeschriebene Montageendstellung erreicht wurde, da in diesem Fall das Ende des Halteabschnitts in Anlage mit dem schulterförmigen Absatz sein muss.

In einer Ausführungsform ist in dem vorderen Außenkonus des Dichtungsträgerrings eine umlaufende Aufnahmenut ausgebildet, wobei der Dichtungsansatz des Dichtelements in der Aufnahmenut angeordnet ist. In der Montagestellung ist der abgetrennte Dichtungsansatz in diesem Fall zwischen dem vorderen Außenkonus des Dichtungsträgerrings und dem Innenkonus des Verschraubungskörpers angeordnet.

Alternativ kann vorgesehen sein, dass der Dichtungsansatz vor einer vorderen Stirnfläche des Außenkonus angeordnet ist. In der Montagestellung ist der abgetrennte Dichtungsansatz in diesem Fall zwischen dem Verschraubungskörper, der Rohr- oder Schlauchleitung und der vorderen Stirnfläche des Dichtungsträgerrings angeordnet. Der abgetrennte Dichtungsansatz liegt also in der Montageendstellung an dem Innenkonus des Verschraubungskörpers, an einer Außenseite der Rohr- oder Schlauchleitung und an der vorderen Stirnfläche des Dichtungsträgerrings an.

Während der Dichtungsansatz des Dichtelements den Dichtungsträgerring insbesondere außen gegenüber dem Verschraubungskörper abdichtet, kann für die Verhinderung eines Leckagepfads entlang der Außenseite des Rohres vorgesehen sein, dass der Dichtungsträgerring auf seiner Innenseite eine umlaufende Dichtungsnut aufweist und ein Dichtungsring in der Dichtungsnut angeordnet ist. Somit werden mittels der Dichtungsträgeranordnung alle möglichen Leckagepfade abgedichtet. In der Montagestellung ist die Dichtungsträgeranordnung also in einem von dem Verschraubungskörper, der Schlauch- oder Rohrleitung und der Überwurfmutter begrenzten Ringraum angeordnet.

In einer Ausführungsform ist vorgesehen, dass der Dichtungsträgerring selbst als Schneidring ausgebildet ist und hierzu auf seiner Innenseite im vorderen Bereich mindestens eine, bevorzugt zwei Schneidkante(n) aufweist.

In einer alternativen Ausführungsform kann der Dichtungsträgerring im hinteren Bereich einen hinteren Innenkonus aufweisen und die Dichtungsträgeranordnung einen separaten, eine oder zwei Schneidkante(n) ausbildenden Schneidring aufweisen, wobei der separate Schneidring innerhalb des hinteren Innenkonus des Dichtungsträgerrings angeordnet ist.

Der jeweilige Schneidring ist in seinem vorderen Bereich also so ausgebildet, dass die Schneidkante(n) unter Kerbwirkung während des Anziehens der Überwurfmutter in den entsprechenden äußeren Abschnitt der Rohr- bzw. Schlauchleitung einschneidet. Ein solcher Schneidring kann insbesondere nach der Norm ISO 8434-1 ausgebildet sein.

Der jeweilige Schneidring kann hierbei an seinem dem vorderen Außenkonus gegenüberliegenden hinteren Ende einen hinteren Außenkonus auf, der mit einem Innenkonus der Überwurfmutter während des Anziehens zusammenwirkt.

In einer weiteren Ausführungsform kann der Dichtungsträgerring als Kompressionshülse ausgebildet sein, wozu der Dichtungsträgerring in seinem dem vorderen Außenkonus abgewandten hinteren Bereich einen hinteren Innenkonus aufweist, der beim Anziehen der Mutter mit einer dem Verschraubungskörper zugewandten Flanke einer insbesondere einteilig an der Rohrleitung angeformten Wulst zusammenwirkt, wobei die dem Verschraubungskörper abgewandten Flanke der Wulst mit einem Innenkonus der Überwurfmutter zusammenwirkt.

Ein Ausführungsform der Erfindung betrifft auch eine Baugruppe der Verschraubung und zwar eine Funktionsmutter, die die Überwurfmutter und die in der Überwurfmutter angeordnete Dichtungsträgeranordnung umfasst, wobei die Dichtungsträgeranordnung bereits vor der Montage durch mindestens ein Sicherungsmittel gegen unbeabsichtigtes Herausfallen aus der Überwurfmutter gesichert ist.

Hierzu kann beispielsweise vorgesehen sein, dass das Dichtelement auf der Außenseite (insbesondere im Bereich des Halteabschnitts) mehrere, bevorzugt in Umfangsrichtung hintereinander angeordnete Vorsprünge aufweist, die so dimensioniert sind, dass sie beim Einbringen der Dichtungsträgeranordnung in die Überwurfmutter durch das Innengewinde der Überwurfmutter elastisch verformt werden und so die Dichtungsträgeranordnung in der Überwurfmutter sichern. Bevorzugt sind die Vorsprünge dabei an dem dem vorderen Außenkonus zugewandten Bereich des Halteabschnitts angeordnet.

Alternativ kann vorgesehen sein, dass das Sicherungsmittel einen Klebstoff umfasst, mit dem die Dichtungsträgeranordnung in der Überwurfmutter gesichert werden kann. Der Klebstoff wird dabei vorzugsweise auf einen hinteren Außenkonus der Dichtungsträgeranordnung oder auf einen Innenkonus der Überwurfmutter aufgebracht. Bei dem Klebstoff handelt es sich bevorzugt um einen Adhäsionskleber mit schwacher Klebewirkung, sodass die Dichtungsträgeranordnung am Anfang des Anziehens der Überwurfmutter leicht von der Überwurfmutter getrennt wird, sodass der Montagevorgang nicht behindert oder erschwert ist.

Der Dichtungsträgerring ist insbesondere aus einem metallischen Werkstoff gebildet, während das Dichtelement und insbesondere auch der Dichtungsring auf der Innenseite des Dichtungsträgerrings aus einem Gummiwerkstoff wie NBR, FKM oder EPDM oder aus einem beständigen Kunststoff wie PTFE oder PEEK gebildet sind.

Die Erfindung sowie das technische Umfeld werden im Folgenden anhand der Figuren beispielhaft erläutert. Die Figuren zeigen schematisch
- Figur 1:: eine erste Ausführungsform einer Dichtungsträgeranordnung in teilweiser Schnittdarstellung,
- Figur 2:: eine zweite Ausführungsform einer Dichtungsträgeranordnung in teilweiser Schnittdarstellung,
- Figur 3:: eine dritte Ausführungsform einer Dichtungsträgeranordnung in teilweiser Schnittdarstellung,
- Figur 4:: ein Dichtelement der Dichtungsträgeranordnungen im Teilschnitt,
- Figur 5:: eine Perspektivansicht des Dichtelements,
- Figur 6:: eine Funktionsmutter mit einer Überwurfmutter und einer Dichtungsträgeranordnung gemäß Figur 1,
- Figur 7:: eine Verschraubung in teilweiser Schnittdarstellung mit einer Dichtungsträgeranordnung gemäß Figur 1 in einer Ausgangsstellung,
- Figur 8:: die Verschraubung gemäß Figur 7 in Montageendstellung,
- Figur 9:: die Dichtungsträgeranordnung gemäß Figur 1 nach einer Erstmontage auf einer Rohrleitung in teilweiser Schnittdarstellung,
- Figur 10:: eine Verschraubung mit einer Dichtungsträgeranordnung gemäß Figur 2 in teilweiser Schnittdarstellung in einer Ausgangsstellung,
- Figur 11:: die Verschraubung gemäß Figur 10 in Montageendstellung,
- Figur 12:: eine Verschraubung mit einer Dichtungsträgeranordnung gemäß Figur 3 in teilweiser Schnittdarstellung in einer Ausgangsstellung und
- Figur 13:: die Verschraubung gemäß Figur 12 in Montageendstellung.

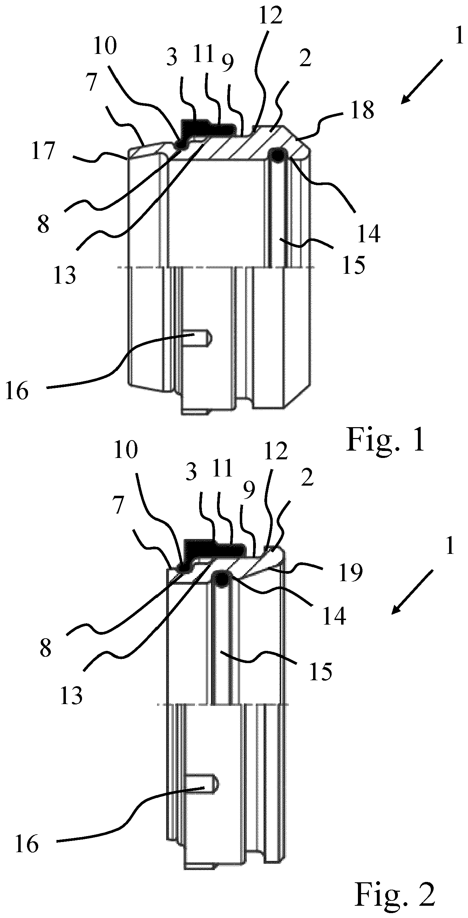

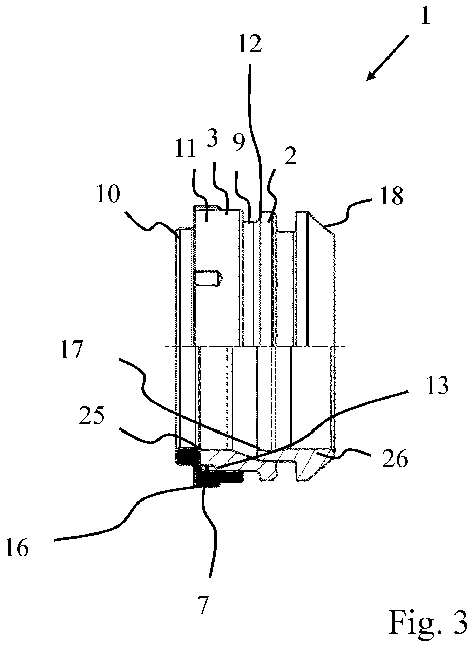

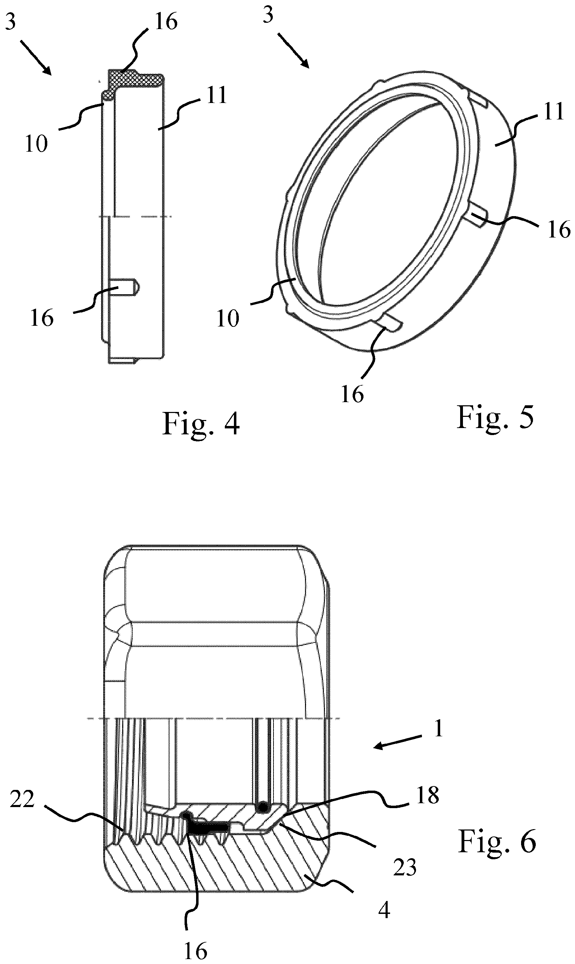

Die in den Figuren 1 bis 3 dargestellten Dichtungsträgeranordnungen 1 umfassen jeweils einen Dichtungsträgerring 2 und ein Dichtelement 3. Das Dichtelement 3 ist in den Figuren 3 und 4 im Detail dargestellt.

Das einteilige Dichtelement 3 umfasst einen schnurförmigen Dichtungsansatz 10 und einen damit verbundenen ringförmigen Halteabschnitt 11. Außen an dem Halteabschnitt 11 sind mehrere in Umfangsrichtung hintereinander angeordnete Vorsprünge 16 ausgebildet. Das Dichtelement 3 ist aus einem Gummiwerkstoff oder Kunststoff gebildet.

Die Dichtungsträgerringe 2 gemäß den Figuren 1 bis 3 weisen an ihrem vorderen (in den Figuren linken Enden) jeweils einen vorderen Außenkonus 7 auf. An den vorderen Außenkonus 7 schließt sich über eine Stufe 13 ein kreiszylinderförmiger Außenabschnitt 9 an, der durch einen schulterförmigen Absatz 12 begrenzt ist.

Die in den Figuren 1 und 2 dargestellten Dichtungsträgerringe 2 weisen in dem vorderen Außenkonus eine Aufnahmenut 8 auf. Das Dichtelement 3 ist mit seinem Dichtungsansatz 10 in der Aufnahmenut 8 angeordnet und erstreckt sich mit seinem Halterabschnitt 11 in Richtung des Außenabschnitts 9. Auf der Innenseite weisen die Dichtungsträgerringe 2 zudem jeweils eine Dichtungsnut 14 auf, in der ein Dichtungsring 15 angeordnet ist.

Der in Figur 1 dargestellte Dichtungsträgerring 2 ist selbst als Schneidring ausgebildet und weist hierzu an seinem vorderen Ende eine Schneidkante 17 und an seinem hinteren Ende ein hinteren Außenkonus 18 auf.

Der Dichtungsträgerring 2 gemäß Figur 2 ist hingegen als Kompressionshülse ausgebildet und weist an seinem hinteren Ende einen hinteren Innenkonus 19 auf.

Die in der Figur 3 dargestellte Dichtungsträgeranordnung 1 weist hingegen zusätzlich zu dem Dichtungsträgerring 2 einen separaten Schneidring 26 mit einer Schneidkante 17 auf. Das Dichtelement 3 ist zudem mit seinem Dichtungsansatz 10 vor einer vorderen Stirnfläche 26 des Dichtungsträgerrings 2 angeordnet.

In Figur 5 ist eine Funktionsmutter dargestellt, die eine Überwurfmutter 4 mit einem Innengewinde 22 umfasst. Die Funktionsmutter weist zudem die Dichtungsträgeranordnung 1 gemäß Figur 1 mit dem als Schneidring ausgebildeten Dichtungsträgerring 2 auf, wobei der hintere Außenkonus 18 des Dichtungsträgerrings 2 in Anlage mit einem Innenkonus 23 der Überwurfmutter 4 ist. Durch die elastisch verformten Vorsprünge 16 ist die Dichtungsträgeranordnung 1 gegen unbeabsichtigtes Herausfallen in der Überwurfmutter 4 gesichert. Hierbei wirken die elastisch verformten Vorsprünge 16 mit dem Innengewinde 22 der Überwurfmutter 4 zusammen.

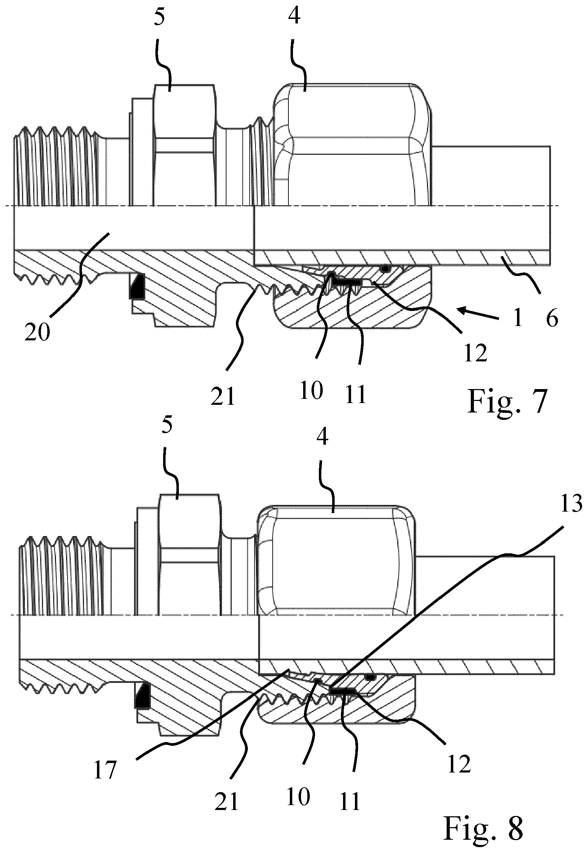

In den Figuren 7 und 8, 10 und 11 sowie 12 und 13 ist nun jeweils eine Verschraubung dargestellt, die einen Verschraubungskörper 5 mit einem Außengewinde 21 und einer Bohrung 20 zum Durchleiten eines Betriebsmediums, eine Dichtungsträgeranordnung 1 und eine Überwurfmutter 4 aufweist. Die Verschraubung kann mit einer Rohrleitung 6 verbunden werden.

In den in den Figuren 7, 10 und 12 dargestellten Ausgangsstellungen ist die Rohrleitung 6 durch die Überwurfmutter 4 und den Dichtungsträgerring 2 in eine Aufnahme im Verschraubungskörper 5 zumindest teilweise eingesteckt. In dieser Ausgangsstellungsstellung ist der vordere Außenkonus 7 des Dichtungsträgerrings 2 bereits teilweise in einem Innenkonus der Aufnahme des Verschraubungskörpers 5 angeordnet. Beim weiteren Anziehen der Überwurfmutter 4 wird nun der Dichtungsträgerring 2 relativ zu dem Verschraubungskörper 5 verschoben, wobei der vordere Außenkonus 7 des Dichtungsträgerrings 2 weiter in den Innenkonus der Aufnahme des Verschraubungskörpers 5 eingeführt wird. Hierbei kommt eine Stirnfläche des Verschraubungskörpers 5 mit dem Halteabschnitt 11 des Dichtelements 3 zunächst in Anlage und verhindert beim weiteren Anziehen eine weitere Bewegung des Halteabschnitts 11 mit dem Dichtungsträgerring 2, sodass der Halteabschnitt 11 von dem in der Aufnahmenut 8 oder vor der vorderen Stirnfläche 26 angeordneten und sich weiter mit dem Dichtungsträgerring 2 bewegenden Dichtungsansatz 10 abgeschert wird. Der Halteabschnitt 11 bewegt sich beim weiteren Anziehen der Überwurfmutter 4 also relativ zu dem Dichtungsträgerring 2 entlang des Außenabschnitts 9. Die Montageendstellung ist erreicht, wenn die Stufe 13 des Dichtungsträgerrings 2 in Anlage mit der Stirnfläche des Verschraubungskörpers 5 gelangt. In dieser Montageendstellung ist das dem Dichtungsansatz 10 abgewandte Ende des Halteabschnitts 11 in Anlage mit dem Absatz 12 des Dichtungsträgerrings 2. Diese Montageendstellung ist in den Figuren 8, 11 und 13 dargestellt.

Wenn der Dichtungsträgerring 2 gemäß der Ausführungsform der Figuren 1, 7 und 8 selbst als Schneidring ausgebildet ist, wird die Rohrleitung 6 bereits in der Ausgangsstellung durch den Dichtungsträgerring 2 hindurch gesteckt, bis die Stirnseite der Rohrleitung 6 mit einem Boden der Aufnahme des Verschraubungskörpers 5 in Anlage kommt. Beim folgenden Anziehen der Überwurfmutter 4 wirkt der Innenkonus 23 der Überwurfmutter 4 mit dem hinteren Außenkonus 18 des Dichtungsträgerrings 2 zusammen. Beim Anziehen der Mutter greifen die Schneidkanten 17 bei der Relativbewegung zu der Rohrleitung 6 unter Kerbwirkung in die Rohrleitung 6 ein.

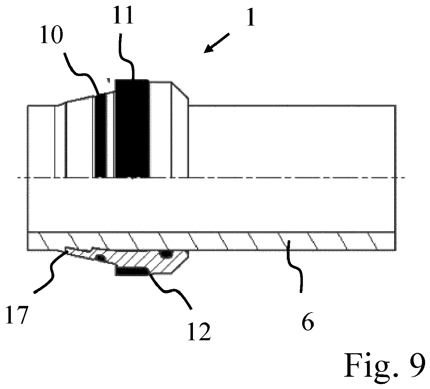

Nach einer Erstmontage kann die Rohrleitung 6 nach Lösen der Überwurfmutter 4 wieder aus dem Verschraubungskörper 5 herausgenommen werden, wobei der Halteabschnitt 11 eine erfolgreiche Montage anzeigen kann. Wenn nämlich das hintere Ende des Halteabschnitts 11 in Anlage mit dem Absatz 12 ist, so hat der Schneidring während der Erstmontage die vorgeschriebene Montageendstellung erreicht. Dies ist anhand der Figur 9 für einen Schneidring dargestellt. In der vorgeschriebenen Montageendstellung ist der Dichtungsansatz 10 von dem ringförmigen Halteabschnitt 11 getrennt. Es entsteht, wie in Figur 9 dargestellt, ein Spalt zwischen dem Dichtungsansatz 10 und dem Halteabschnitt 11, durch welchen der metallische Dichtungsträgerring 2 sichtbar wird. Dies zeigt nach Lösen der Überwurfmutter 4 und Herausnehmen der Rohrleitung 6 aus dem Verschraubungskörper 5 ebenfalls eine erfolgreiche Montage an, die vom Monteur auch als Signal für das Erreichen der vorgeschriebenen Montageendstellung genutzt werden kann.

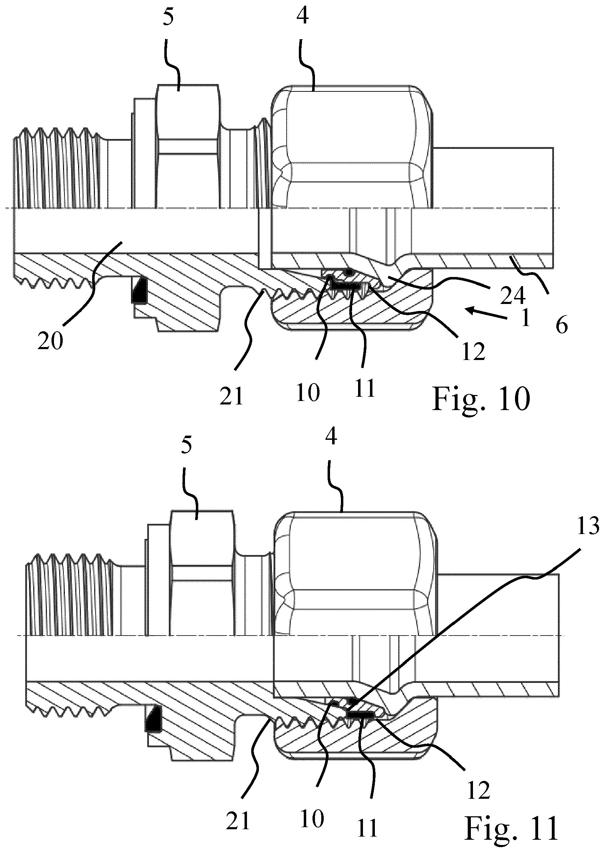

Ist der Dichtungsträgerring 2 hingegen als Kompressionshülse gemäß den Figuren 2, 10 und 11 ausgebildet, so weist die Rohrleitung 6 eine Wulst 24 auf, wobei die Wulst 24 mit ihrer dem Verschraubungskörper 5 zugewandten Flanke in den hinteren Innenkonus 19 des Dichtungsträgerrings 2 eingesteckt wird, sodass das Stirnende der Rohrleitung 9 in der in Figur 10 dargestellten Ausgangsstellung noch nicht in Anlage mit dem Boden der Aufnahme des Verschraubungskörpers 5 ist. Wird nun die Überwurfmutter 4 angezogen, so wirkt der Innenkonus 23 der Überwurfmutter 4 mit der dem Verschraubungskörper 5 abgewandten Flanke der Wulst 24 zusammen, sodass der Dichtungsträgerring 2 zusammen mit der Rohrleitung 6 in den Verschraubungskörper 5 hinein bewegt wird, wobei hierbei, wie bereits oben beschrieben, der Halteabschnitt 11 von dem Dichtungsansatz 10 des Dichtelements 3 abgeschert wird.

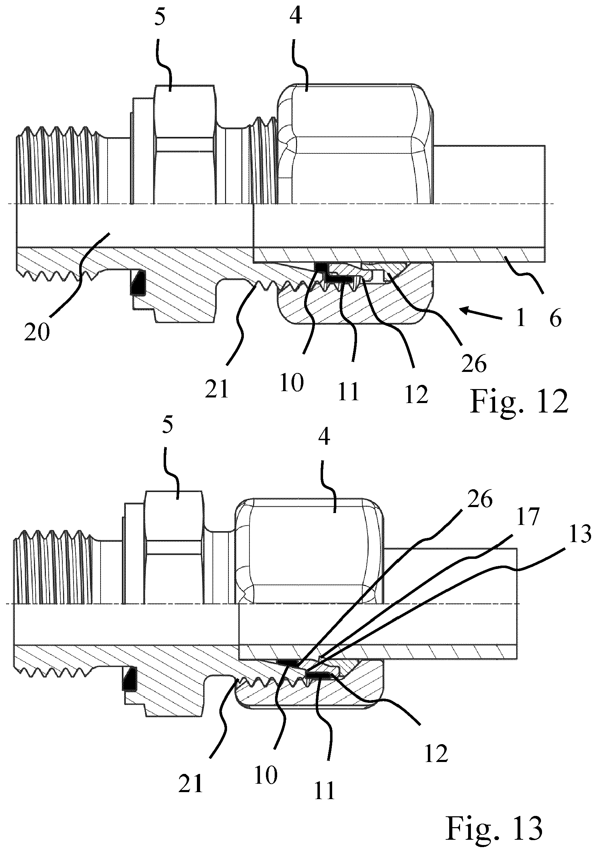

Gemäß der in den Figuren 12 und 13 gezeigten Ausführungsform greift beim Anziehen der Überwurfmutter 4 die Schneidkante 17 des separaten Schneidrings 26 unter Kerbwirkung in die Außenseite der Rohrleitung 6 ein, während der vordere Außenkonus 7 des Dichtungsträgerrings 2 in den Innenkonus des Verschraubungskörpers 5 eingeschoben wird. Wie bereits oben dargelegt, wird hierbei der Dichtungsansatz 10 von dem Halteabschnitt 11 abgeschert. In der in Figur 13 dargestellten Montageendstellung ist der abgetrennte Dichtungsansatz 10 zwischen einer Außenseite der Rohrleitung 6, der vorderen Stirnfläche 26 des Dichtungsträgerrings 2 und dem Innenkonus des Verschraubungskörpers 5 angeordnet.

### Bezugszeichenliste

- 1: Dichtungsträgeranordnung
- 2: Dichtungsträgerring
- 3: Dichtelement
- 4: Überwurfmutter
- 5: Verschraubungskörper
- 6: Rohrleitung
- 7: vorderer Außenkonus
- 8: Aufnahmenut
- 9: Außenabschnitt,
- 10: Dichtungsansatz
- 11: Halteabschnitt
- 12: Absatz
- 13: Stufe
- 14: Dichtungsnut
- 15: Dichtungsring
- 16: Vorsprung
- 17: Schneidkante
- 18: hinterer Außenkonus
- 19: hinterer Innenkonus
- 20: Bohrung
- 21: Außengewinde
- 22: Innengewinde
- 23: Innenkonus Überwurfmutter
- 24: Wulst
- 25: vordere Stirnfläche
- 26: separater Schneidring

## Patentansprüche

1. Verschraubung, mit
- einem Verschraubungskörper (5), wobei der Verschraubungskörper (5) eine Bohrung (20) zur Durchleitung eines Mediums und ein Außengewinde (21) aufweist,
- einer Überwurfmutter (4), wobei die Überwurfmutter (4) ein Innengewinde (22) zum Aufschrauben auf das Außengewinde (21) des Verschraubungskörpers (5) aufweist, und
- einer Dichtungsträgeranordnung (1), wobei die Dichtungsträgeranordnung (1) einen Dichtungsträgerring (2) und ein Dichtelement (3) aufweist, wobei der Dichtungsträgerring (2) einen vorderen Außenkonus (7) und einen sich an den vorderen Außenkonus (7) anschließenden Außenabschnitt (9) ausbildet,
wobei eine Rohr- oder Schlauchleitung (6) durch die Dichtungsträgeranordnung (1) in Richtung des Verschraubungskörpers (5) steckbar ist und die Überwurfmutter (4) aus einer Ausgangsstellung in eine Montagestellung anziehbar ist, **dadurch gekennzeichnet, dass** das Dichtelement (3)
• einen am vorderen Außenkonus (7) angeordneten Dichtungsansatz (10) und
• einen sich von dem Dichtungsansatz (10) in Richtung des
Außenabschnitts (9) erstreckenden Halteabschnitt (11) aufweist, wobei das Dichtelement (3) so ausgebildet ist, dass der Halteabschnitt (11) des Dichtelements (3) beim Anziehen der Überwurfmutter (4) von dem Dichtungsansatz (10) des Dichtelements (3) getrennt wird.

2. Verschraubung nach Anspruch 1, wobei der Außenabschnitt (9) kreiszylinderförmig ausgebildet ist.

3. Verschraubung nach Anspruch 1 oder 2, wobei der Außenabschnitt (9) auf der dem Außenkonus (7) abgewandten Seite durch einen schulterförmigen Absatz (12) am Dichtungsträgerring (2) begrenzt ist.

4. Verschraubung nach Anspruch 3, wobei der abgetrennte Halteabschnitt (11) mit seinem hinteren Ende in der Montagestellung an dem schulterförmigen Absatz (12) anliegt.

5. Verschraubung nach einem der vorhergehenden Ansprüche, wobei zwischen dem Außenkonus (7) und dem Außenabschnitt (9) eine Stufe (13) ausgebildet ist.

6. Verschraubung nach einem der vorhergehenden Ansprüche, wobei in dem Außenkonus (7) eine umlaufende Aufnahmenut (8) ausgebildet ist und der Dichtungsansatz (10) in der Aufnahmenut (8) angeordnet ist.

7. Verschraubung nach einem der Ansprüche 1 bis 5, wobei der Dichtungsansatz (10) vor einer vorderen Stirnfläche (25) des Außenkonus (7) angeordnet ist.

8. Verschraubung nach einem der vorhergehenden Ansprüche, wobei der Dichtungsträgerring (2) auf seiner Innenseite eine Dichtungsnut (14) aufweist und wobei ein Dichtungsring (15) in der Dichtungsnut (14) angeordnet ist.

9. Verschraubung nach einem der vorhergehenden Ansprüche, wobei der Dichtungsträgerring (2) als Schneidring ausgebildet ist und hierzu auf seiner Innenseite insbesondere im vorderen Bereich mindestens eine Schneidkante (17) aufweist.

10. Verschraubung nach einem der Ansprüche 1 bis 8, wobei der Dichtungsträgerring (2) im hinteren Bereich einen hinteren Innenkonus (19) aufweist und die Dichtungsträgeranordnung (1) einen separaten, eine Schneidkante (17) ausbildenden Schneidring (26) aufweist, wobei der separate Schneidring (26) innerhalb des hinteren Innenkonus (19) angeordnet ist.

11. Verschraubung nach Anspruch 9 oder 10, wobei der Schneidring einen hinteren Außenkonus (18) an seinem den vorderen Außenkonus (7) abgewandten Ende aufweist, wobei beim Anziehen ein Innenkonus (23) der Überwurfmutter (4) an dem hinteren Außenkonus (18) des Schneidrings anliegt.

12. Verschraubung nach einem der Ansprüche 1 bis 8, wobei der Dichtungsträgerring (2) als Kompressionshülse ausgebildet ist und hierzu im hinteren Bereich einen hinteren Innenkonus (19) aufweist, wobei die Rohrleitung (6) eine Wulst (24) aufweist und ein Innenkonus (23) der Überwurfmutter (4) die Wulst (24) beim Anziehen in den hinteren Innenkonus (19) des als Kompressionshülse ausgebildeten Dichtungsträgerrings (2) drückt.

13. Verschraubung nach einem der vorhergehenden Ansprüche, wobei die Dichtungsträgeranordnung (1) bereits vor der Montage durch mindestens ein Sicherungsmittel gegen unbeabsichtigtes Herausfallen in der Überwurfmutter (4) gesichert ist.

14. Verschraubung nach einem der vorhergehenden Ansprüche, wobei auf der Außenseite des Dichtelements (3) mehrere, insbesondere in Umfangsrichtung hintereinander angeordnete Vorsprünge (16) als Sicherungsmittel ausgebildet sind.

15. Verschraubung nach Anspruch 13 oder 14, wobei das Sicherungsmittel einen Klebstoff umfasst.
